# EUROPEAN PATENT APPLICATION

(11) **EP 4 451 024 A1**
(43) Date of publication of application: **23.10.2024**
(21) Application number: 23180665.4
(22) Date of filing: 21.06.2023
(51) Int. Cl.: G02B 6/12

(54) **PHOTONIC CIRCUIT WITH REDUNDANT PORTIONS**

(30) Priority: 20.04.2023 US 202318137030
(71) Applicant: II-VI Delaware, Inc., Wilmington, Delaware 19801 (US)
(72) Inventor: Melikyan, Argishti, Marlboro, NJ 07746 (US); Dong, Po, Fremont, CA 94536 (US)
(74) Representative: Forresters IP LLP

(57) **Abstract**

A photonics integrated circuit chip includes a substrate, an interface port unit IPU formed on the substrate, a photonics circuit unit PCU formed on the substrate, a photonics circuit 1PC formed on the substrate and optically coupled between the interface port unit IPU and the photonics circuit unit PCU, and a photonics circuit 2PC formed on the substrate and optically coupled between the interface port unit IPU and the photonics circuit unit PCU in parallel with photonics circuit 1PC. The photonics circuit 1PC and the photonics circuit 2PC may be at least one of the following: functional duplicates of each other with intentionally introduced physical differences in their fabrication layouts; differently optically tuned versions of each other; and/or functionally equivalent versions of each other with intentionally introduced differences in their circuit layouts.

## Description

### BACKGROUND

### 1. Field

The present disclosure describes photonic integrated circuit (PIC) chips or dies with one or more redundant parts having little or no fabrication sensitivity whereupon said part(s) of the PIC chip may be reused allowing for more functional PIC chips per wafer.

### 2. Description of Related Art

Photonic integrated circuits (PICs) usually exhibit fabrication sensitivity. For example, PICs designed for a specific wavelength dependent response often exhibit degradation and detuning from a target response function due to variances in manufacturing or fabrication tolerances. For example, as is known in the art, a wafer including a large number or set of PIC chips may include a first subset of PIC chips that are functional and within target specifications or design tolerance, a second subset of PIC chips that are functional but outside of target specifications or design tolerance, and third subset of PIC chips that are not functional. This fabrication sensitivity reduces the wafer yield of the PIC chips and, hence, increases the cost of manufacturing PIC chips that are functional and within design tolerance.

Example PIC chips may include one or more resonant devices, such as a micro ring, a micro disk, a Fabry-Perot cavity, a Bragg grating, etc. and/or one or more interferometric devices, such as a Mach-Zehnder interferometer, a Michaelson interferometer, an array-waveguide grating, a delay interferometer, lattice filters, etc.

Presently, this fabrication sensitivity is overcome by:
active control of the phase and thus the response of the individual components. For example, a phase shifter may be incorporated in a part of the PIC chip to allow for active control of phase whereupon it is possible to compensate for fabrication sensitivity; and/or
cherry picking whereupon individual PIC dies are tested after fabrication and PIC dies that show performance in accordance with target specifications or design tolerance are selected, while PIC dies that do not show performance in accordance with target specifications or design tolerance are rejected.

### SUMMARY

Disclosed herein are PIC chips, each of which includes a redundant optical port that connects to duplicate photonic circuitry on the same PIC chip. Herein, when used in connection with the terms "photonic integrated circuit" or "PIC", the terms "chip", "chips", "die", and "dies" may be used interchangeably. Each copy of the photonic circuitry of a PIC chip, e.g., primary and duplicate copies of the photonic circuitry, may have a different designed response to compensate for variations in the copies of the photonic circuitry that may occur during the production / fabrication of PIC chip and, more specifically, the production / fabrication the wafer that includes a number of the PIC chips.

In one non-limiting embodiment or example, a PIC chip includes a substrate, an interface port unit IPU formed on the substrate, a photonics circuit unit PCU formed on the substrate, a photonics circuit 1PC formed on the substrate and optically coupled between the interface port unit IPU and the photonics circuit unit PCU, and a photonics circuit 2PC formed on the substrate and optically coupled between the interface port unit IPU and the photonics circuit unit PCU in parallel with photonics circuit 1PC. The photonics circuit 1PC and the photonics circuit 2PC are at least one of the following: functional duplicates of each other with intentionally introduced physical differences in their fabrication layouts, differently optically tuned versions of each other; and functionally equivalent versions of each other with intentionally introduced differences in their circuit layouts. In an example, the interface port unit IPU may include an optical port 1OP and an optical port 2OP.

The differently optically tuned versions of the photonics circuit 1PC and the photonics circuit 2PC may be tuned to at least one of the following: to detect different frequencies of light; to detect different wavelengths of light; to detect different phases of light; to have different losses at different frequencies; and to attenuate different frequencies.

The functionally equivalent versions of the photonics circuit 1PC and the photonics circuit 2PC with intentionally introduced differences in their circuit layouts may include at least one of the following: one or more optical elements of the photonics circuit 1PC each having a different geometrical size compared to a comparable functionally equivalent element of the photonics circuit 2PC; a portion of the photonics circuit 1PC having a different number of optical elements compared to a comparable functionally equivalent portion of the photonics circuit 2PC; and a portion of the photonics circuit 1PC having one or more different optical elements compared to a comparable functionally equivalent portion of the photonics circuit 2PC.

### BRIEF DESCRIPTION OF THE DRAWINGS

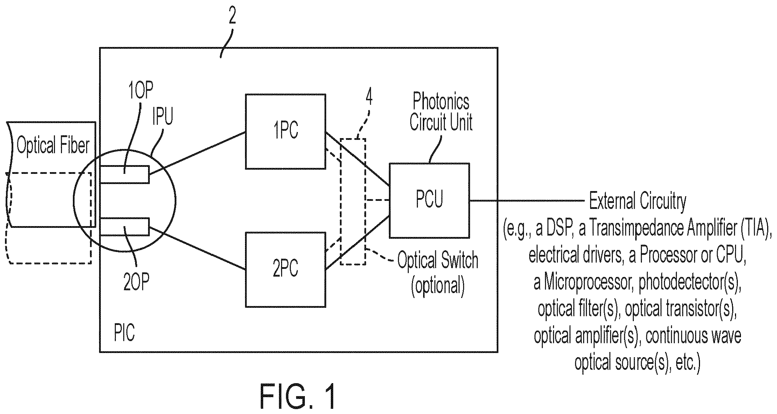

Fig. 1 is diagrammatic schematic view of an example generic PIC chip in accordance with the principles of the present disclosure comprising an interface port unit (IPU), a photonics circuit unit (PCU), a pair of photonics integrated circuits (1PC and 2PC) optically coupled in parallel between the interface port unit IPU and the photonics circuit unit PCU, and an optional optical switch optically coupled between the pair of photonics integrated circuits 1PC and 2PC and the photonics circuit unit PCU, wherein the photonics circuit unit PCU may be coupled to output or receive optical or electrical signal to or from external circuitry;

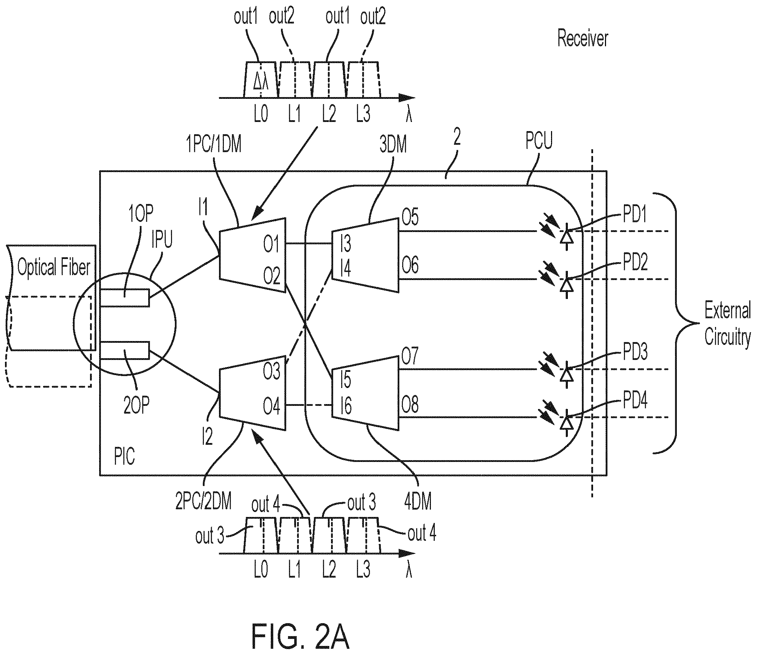

Fig. 2A is diagrammatic schematic view of an example of the generic PIC chip of Fig. 1 in the nature of a receiver PIC chip wherein the photonics integrated circuits 1PC and 2PC are optical demultiplexers 1DM and 2DM, and the photonics circuit unit PCU includes optical-electrical converters or photodiodes PD1-PD4 and optical demultiplexers 3DM and 4DM optically coupled between the optical demultiplexers 1DM and 2DM and the optical-electrical converters or photodiodes PD1-PD4 which may be coupled to output electrical signal to external circuitry;

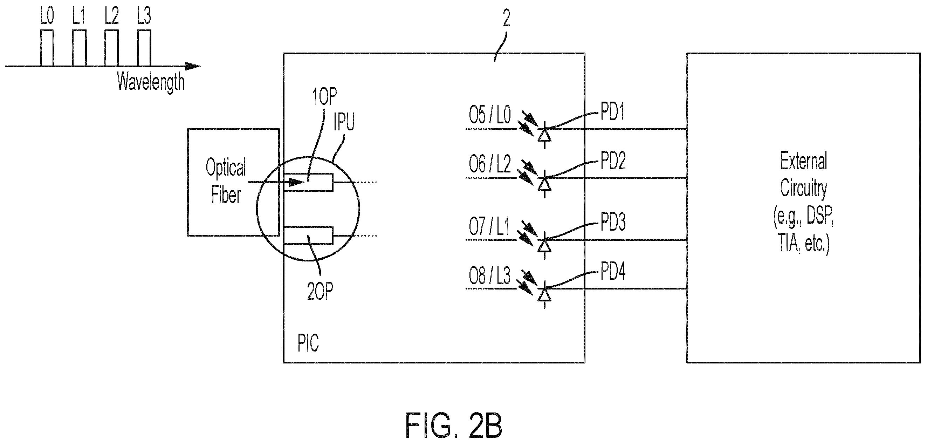

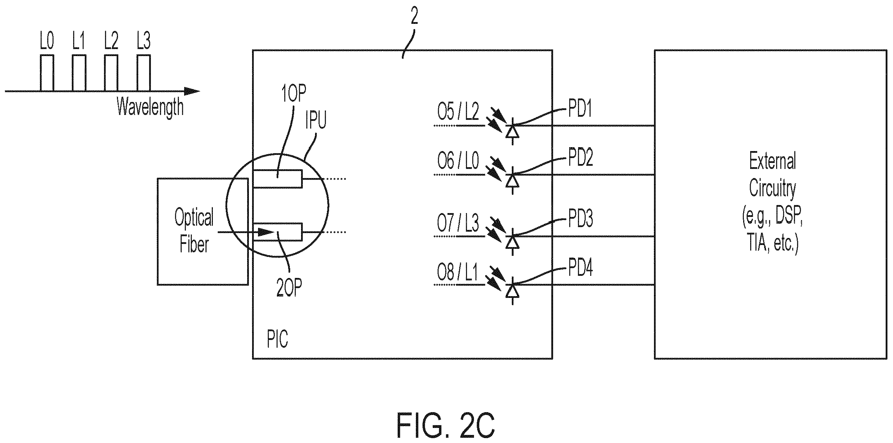

Figs. 2B-2C are diagrammatic schematic views of the operation of receiver PIC chip of Fig. 2A when an input optical fiber is optically coupled to a first optical port (1OP) of the interface port unit IPU (Fig. 2B) or is optically coupled to a second optical port (2OP) of the interface port unit IPU (Fig. 2C), wherein electrical signals generated and output by the optical-electrical converters or photodiodes PD1-PD4 may be coupled for processing or handling to external circuitry comprising, in an example, a Digital Signal Processor (DSP);

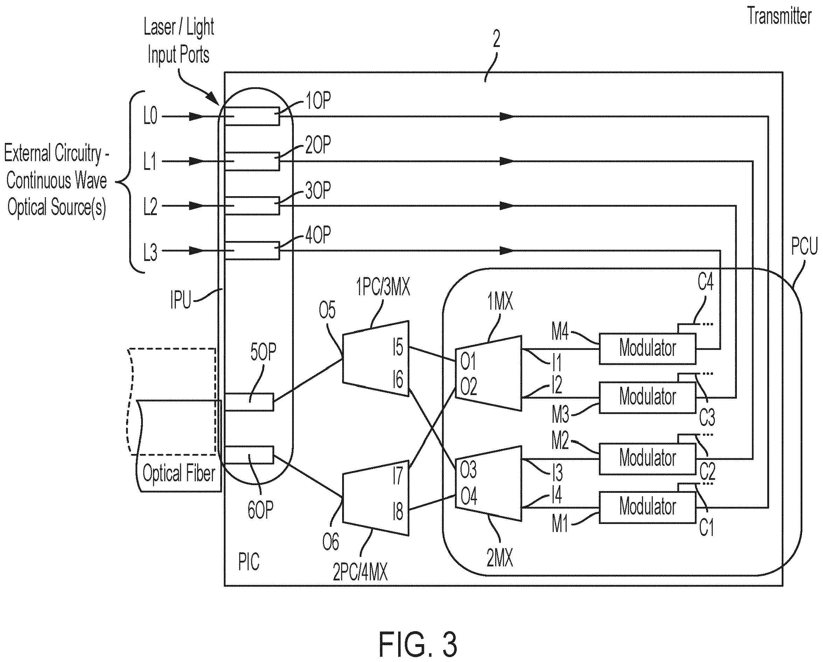

Fig. 3 is diagrammatic schematic view of an example of the generic PIC chip of Fig. 1 in the nature of a transmitter PIC chip wherein the photonics integrated circuits 1PC and 2PC are optical multiplexers 3MX and 4MX, and the photonics circuit unit PCU includes optical multiplexers 1MX and 2MX optically coupled between the optical multiplexers 3MX and 4MX and modulators M1-M4 of the photonics circuit unit PCU which are optically coupled between optical multiplexers 1MX and 2MX and optical ports 1OP-4OP of the interface port unit IPU which may receive optical signal L0-L4 from external circuitry, such as continuous wave optical source(s), and the optical multiplexers 3MX and 4MX are optically coupled between the optical multiplexers 1MX and 2MX and optical ports 5OP and 6OP of the interface port unit IPU; and

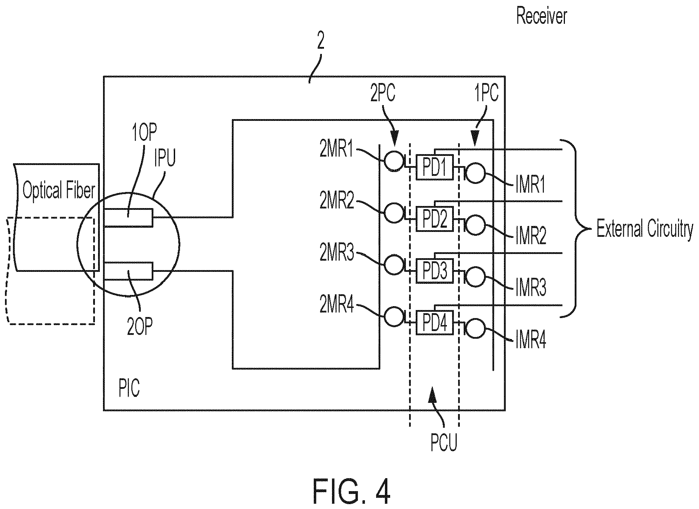

Fig. 4 is diagrammatic schematic view of an example of the generic PIC chip of Fig. 1 in the nature of a receiver PIC chip wherein the photonics integrated circuits 1PC and 2PC include optical elements in the nature of micro rings 1MR1-1MR4 and 2MR1-2MR4 and the photonics circuit unit PCU includes optical-electrical converters or photodiodes PD1-PD4, wherein each optical-electrical converter or photodiode PD is disposed whereupon light output by an optical circuit element of the photonics circuit 1PC or an optical circuit element of the photonics circuit 2PC is received by the optical-electrical converter or photodiode PD and converted by the optical-electrical converter or photodiode PD into a corresponding electrical signal which may be output to external circuitry for processing or handling.

### DESCRIPTION

Various non-limiting examples will now be described with reference to the accompanying figures where like reference numbers correspond to like or functionally equivalent elements.

For purposes of the description hereinafter, terms like "end," "upper," "lower," "right," "left," "vertical," "horizontal," "top," "bottom," "lateral," "longitudinal," and derivatives thereof shall relate to the example(s) as oriented in the drawing figures. However, it is to be understood that the example(s) may assume various alternative variations and step sequences, except where expressly specified to the contrary. It is also to be understood that the specific example(s) illustrated in the attached drawings, and described in the following specification, are simply exemplary examples or aspects of the disclosure. Hence, the specific examples or aspects disclosed herein are not to be construed as limiting.

Further, as used herein, all numbers expressing dimensions, physical characteristics, processing parameters, quantities of ingredients, reaction conditions, and the like, used in the specification and claims are to be understood as being modified in all instances by the term "approximately" or "about". Accordingly, unless indicated to the contrary, the numerical values set forth in the following specification and claims may vary depending upon the desired properties sought to be obtained by the present disclosure. At the very least, each numerical value should at least be construed in light of the number of reported significant digits and by applying ordinary rounding techniques. Moreover, all ranges disclosed herein are to be understood to encompass the beginning and ending range values and any and all subranges subsumed therein. For example, a stated range of "1 to 10" should be considered to include any and all subranges between (and inclusive of) the minimum value of 1 and the maximum value of 10; that is, all subranges beginning with a minimum value of 1 or more and ending with a maximum value of 10 or less, e.g., 1 to 3.3, 4.7 to 7.5, 5.5 to 10, and the like. "A" or "an" refers to one or more.

As used herein, "coupled", "coupling", and similar terms refer to two or more elements that are joined, linked, fastened, connected, put in communication, or otherwise associated (e.g., mechanically, electrically, fluidly, optically, electromagnetically) with one another. In various examples, the elements may be associated directly or indirectly. As an example, element A may be directly associated with element B. As another example, element A may be indirectly associated with element B, for example, via another element C. It will be understood that not all associations among the various disclosed elements are necessarily represented. Accordingly, couplings other than those depicted in the figures may also exist.

As used herein, the phrase "at least one of", when used with a list of items, means different combinations of one or more of the listed items may be used and only one of each item in the list may be needed. For example, "at least one of item A, item B, and item C" may include, without limitation, item A or item A and item B. This example also may include item A, item B, and item C, or item B and item C. In other examples, "at least one of" may be, for example, without limitation, two of item A, one of item B, and ten of item C; four of item B and seven of item C; and other suitable combinations.

With reference to Fig. 1, in some non-limiting embodiments or examples, a PIC chip in accordance with the principles of the present disclosure may include a substrate 2, an interface port unit IPU formed on the substrate 2, a photonics circuit unit PCU formed on the substrate, a photonics circuit 1PC formed on the substrate and optically coupled between the interface port unit IPU and the photonics circuit unit PCU, and a photonics circuit 2PC formed on the substrate and optically coupled between the interface port unit IPU and the photonics circuit unit PCU in parallel with photonics circuit 1PC. The photonics circuit 1PC and the photonics circuit 2PC may be at least one of the following: (a) functional duplicates of each other with intentionally introduced physical differences in their fabrication layouts; and/or (b) differently optically tuned versions of each other; and/or (c) functionally equivalent versions of each other with intentionally introduced differences in their circuit layouts. One non-limiting example of the effect of one or more of (a)-(c) may include the optical power useable with photonics circuit 1PC (or photonics circuit 2PC) may be greater, e.g., greater than 20 dB or more, than the optical power useable with photonics circuit 2PC (or photonics circuit 1PC).

In an example, the interface port unit IPU may include an optical port 1OP, which may be considered a first or primary optical port of the PIC chip, and an optical port 2OP, which may be consider a secondary or redundant optical port of the PIC chip. In an example, the photonics circuit 1PC may be considered a first or primary photonics circuit of the PIC chip which is optically coupled to optical port 1OP while the photonics circuit 2PC may be considered a secondary or redundant photonics circuit which is optically coupled to optical port 2OP.

In an example, assume an external optical fiber (shown in solid line) is optically coupled to optical port 1OP and the PIC chip is used as a receiver. In this example, one or more optical or laser signals may be input via the external optical fiber and the optical port 1OP to the photonics circuit 1PC for processing or handling. After processing or handling by the photonics circuit 1PC, the thus processed or handled one or more optical signals may be output to the photonics circuit unit PCU for further processing or handling and output, as optical or electrical signal(s), to external circuitry for processing or handling.

In another example, assume the external optical fiber (shown in dashed line) is optically coupled to optical port 2OP and the PIC chip is used as a receiver. In this example, the one or more optical or laser signals may be input via the external optical fiber and the optical port 2OP to photonics circuit 2PC for processing or handling. After processing or handling by photonics circuit 2PC, the thus processed or handled one or more optical signals may be output to the photonics circuit unit PCU for further processing or handling and output, as optical or electrical signal(s), to external circuitry for handling or handling.

Herein, the external optical fiber shown in solid line and the external optical fiber shown in dashed line may be the same external optical fiber just connected to the optical port 1OP or the optical port 2OP, respectively.

In another example, assume the external optical fiber (shown in solid line) is optically coupled to optical port 1OP and the PIC chip is used as a transmitter. In this example, one or more optical or electrical signals input via one or more optical or electrical fibers or conductors from the external circuitry into the photonics circuit unit PCU may be processed or handled thereby into one or more optical signals which may be output by the photonics circuit unit PCU to one or both of the photonics circuit 1PC and the photonics circuit 2PC for further processing or handling. Because, in this example, photonics circuit 1PC is optically coupled to the external optical fiber (shown in solid line) via optical port 1OP, the one or more optical signals processed or handled by the photonics circuit 1PC may be output on the external optical fiber via the optical port 1OP.

In another example, assume the external optical fiber (shown in dashed line) is optically coupled to optical port 2OP and the PIC chip is used as a transmitter. In this example, one or more optical or electrical signals input via one or more optical or electrical fibers or conductors from the external circuitry into the photonics circuit unit PCU may be processed or handled thereby into one or more optical signals which may be output by the photonics circuit unit PCU to one or both of the photonics circuit 1PC and the photonics circuit 2PC for further processing or handling. Because, in this example, photonics circuit 2PC is optically coupled to the external optical fiber (shown in dashed line) via optical port 2OP, the one or more optical signals processed or handled by the photonics circuit 2PC may be output on the external optical fiber via the optical port 2OP.

In an example, when the PIC chip is used as a transmitter, whereupon the photonics circuit unit PCU receives optical signals from the external circuitry, the optical signals received from the from the external circuitry may be one or more continuous wave optical signals shown, for example, as one or more of the optical signals L0-L3 in the example of the PIC chip used as a transmitter in Fig. 3, discussed hereinafter.

In an example, the PIC chip may include an optional optical switch 4 optically coupled (as shown by dashed lines) between the photonics circuit unit PCU and both photonics circuit 1PC and the photonics circuit 2PC. This optical switch 4 may be controlled, e.g., via a control signal output by a controller (not shown) that may be part of the PIC chip or separate from the PIC chip, e.g., part of the external circuitry, to selectively connect the photonics circuit unit PCU to either the photonics circuit 1PC or the photonics circuit 2PC thereby avoiding any possible interference that may arise from having the photonics circuit unit PCU optically coupled to both the photonics circuit 1PC and the photonics circuit 2PC.

In an example, to avoid potential operational interference between the photonics circuit 1PC and the photonics circuit 2PC during use of the PIC chip, it is envisioned that only one of the optical port 1OP or the optical port 2OP at time may be coupled to an external optical fiber.

In an example, if the photonics circuit 1PC, e.g., the primary photonics circuit, is operational within its target specifications or design tolerance, the external optical fiber may be preferentially optically coupled (as shown by solid line) to photonics circuit 1PC via optical port 1OP. In this example, the photonics circuit 1PC may (but not necessarily) have a set of target specifications or design tolerances that may be more desirable for a particular application than the set of target specifications or design tolerances of the photonics circuit 2PC. However, this is not to be construed in a limiting sense.

In an example, assume the photonics circuit 1PC is, due to variances in manufacturing or fabrication tolerances, either not operational at all or is not operational within its set of target specifications or design tolerances, but that the photonics circuit 2PC, e.g., the secondary photonics circuit, is operational within its set of target specifications or design tolerances, which may be the same or different than the target specifications or design tolerances of the photonics circuit 1PC. In this example, the external optical fiber may be optically coupled (as shown by phantom lines) to photonics circuit 2PC via optical port 2OP.

Because of the capability to use either the photonics circuit 1PC or the photonics circuit 2PC simply by connecting the external optical fiber to optical port 1OP or optical port 2OP, the PIC chip may be useable even if one of the photonics circuit 1PC or the photonics circuit 2PC is not operational or is or is not operational within its set of target specifications or design tolerances.

Moreover, because the photonics circuit 1PC and the photonics circuit 2PC may be functional duplicates of each other with intentionally introduced physical differences in their fabrication layouts, and/or differently optically tuned versions of each other, and/or functionally equivalent versions of each other with intentionally introduced differences in their circuit layouts, there may be instances or applications where it may be desirable to use the photonics circuit 1PC over the photonics circuit 2PC, or vice versa.

Non-limiting examples of external circuitry that may be used with the PIC chip when used as a receiver or transmitter may include, without limitation, one or more of the following: a digital signal processor (DSP), a transimpedance amplifier (TIA), electrical drivers (e.g., to drive the modulators shown in Fig. 3), a processor or CPU, a microprocessor, photodetector(s), optical filter(s), optical transistor(s), optical amplifier(s), continuous wave optical source(s), etc. However, this is not to be construed in a limiting sense.

In an example, the optical port 1OP and the optical port 2OP may be spaced apart from each other between 1 micrometers and 20 millimeters, inclusive, from each other. However, this is not to be construed in a limiting sense since it is envisioned that the optical port 1OP and the optical port 2OP may be spaced apart from each other any distance deemed suitable and/or desirable by one skilled in the art, e.g., for a particular application.

In an example, the differently optically tuned versions of the photonics circuit 1PC and the photonics circuit 2PC may be tuned, without limitation, to at least one of the following: to detect different frequencies of light; to detect different wavelengths of light; to detect different phases of light; to have different losses at different frequencies; and to attenuate different frequencies.

In an example, the functionally equivalent versions of the photonics circuit 1PC and the photonics circuit 2PC with intentionally introduced differences in their circuit layouts may include, without limitation, at least one of the following: one or more optical elements of the photonics circuit 1PC each having a different geometrical size compared to a comparable functionally equivalent element of the photonics circuit 2PC; a portion of the photonics circuit 1PC having a different number of optical elements compared to a comparable functionally equivalent portion of the photonics circuit 2PC; and a portion of the photonics circuit 1PC having one or more different optical elements compared to a comparable functionally equivalent portion of the photonics circuit 2PC. Non-limiting examples of the photonics circuit 1PC having one or more different optical elements compared to a comparable functionally equivalent portion of the photonics circuit 2PC, or vice versa, may include, without limitation, direction couplers; waveguide designs; multi-mode interference couplers; star couplers; tapers; and optical transitions.

With reference to Fig. 2A and with continuing reference to Fig. 1, in some non-limiting embodiments or examples, a PIC chip in accordance with the principles of the present disclosure may comprise a receiver which includes the photonics circuit 1PC comprising an optical demultiplexer 1DM including an optical input I1 optically coupled to the optical port 1OP and optical outputs O1 and O2. In this example, the photonics circuit 2PC may comprise an optical demultiplexer 2DM including an optical input I2 optically coupled to the optical port 2OP and optical outputs O3 and O4. The photonics circuit unit PCU may, in this example, comprise an optical demultiplexer 3DM, an optical demultiplexer 4DM, and optical-electrical converters, such as, for example, without limitation, photodiodes PD1-PD4. The optical demultiplexer 3DM may comprise optical inputs I3 and I4 optically coupled to optical outputs O1 and O3 and optical outputs O5 and O6 optically coupled to optical-electrical converters or photodiodes PD1 and PD2. The optical demultiplexer 4DM may comprise optical inputs I5 and I6 optically coupled to optical outputs O2 and O4 and optical outputs O7 and O8 optically coupled to optical-electrical converters or photodiodes PD3 and PD4.

In an example, a first set of the optical demultiplexers comprising, for example, 1DM, 3DM, and 4DM and a second set of the optical demultiplexers comprising, for example, 2DM, 3DM, and 4DM may be operative, one set of optical demultiplexers at a time, whereupon a stream of light including a plurality of optical channels or lanes (L) having different wavelengths of light input into the optical port 1OP or the optical port 2OP, respectively, are separated into individual optical channels or lanes, wherein each said individual optical channel or lane is output on a single one of the optical outputs O5 - O8.

In an example, the arrangement of the plurality of optical channels or lanes output on a plurality of the optical outputs O5 - O8 is different when the stream of light including the plurality of optical channels or lanes is input into the optical port 1OP or the optical port 2OP. For example, as shown in Fig. 2B, when the stream of light including the plurality of optical channels or lanes, including optical channels or lanes L0-L3, is input into the optical port 1OP, the first set of optical demultiplexers may output optical channel or lane L0 on optical output O5, output optical channel or lane L1 on optical output O7, output optical channel or lane L2 on optical output O6, and output optical channel or lane L3 on optical output O8. In another example, shown in Fig. 2C, when the stream of light including the plurality of optical channels or lanes, including optical channels or lanes L0-L3, is input into the optical port 2OP, the second set of optical demultiplexers may output optical channel or lane L0 on optical output O6, output optical channel or lane L1 on optical output O8, output optical channel or lane L2 on optical output O5, and output optical channel or lane L3 on optical output O7. However, these examples are not to be construed in a limiting sense.

In the examples shown in Figs. 2A-2C, the optical-electrical converters or photodiodes PD 1 - PD4 convert the optical signals output via optical outputs O5 - O8 into corresponding electrical signals which are output to the external circuitry, such as the DSP or TIA shown in Figs. 2B-2C and/or any other circuitry now known or hereafter developed capable of processing or handling electrical signals such as, for example, a processor, or a CPU, or a microprocessor.

Herein, while photodiodes PD are described as a specific example of optical-electrical converters or means for converting optical signals into electrical signals, it is envisioned that any other suitable and/or desirable device, now known or hereafter developed, that performs optical-electrical conversion may also or alternatively be used.

With continuing reference to Figs. 1 and 2A-2C, as can be seen the PIC chip in accordance with the principles of the present disclosure comprising a receiver may include the combination of the photonics circuit 1PC in the nature of an optical demultiplexer 1DM, the photonics circuit 2PC in the nature of an optical demultiplexer 2DM, and the photonics circuit unit PCU comprising optical demultiplexers 3DM and 4DM. A first set of the optical demultiplexers, e.g., 1DM, 3DM, and 4DM, may be operative to separate a stream of light, including a plurality of optical channels or lanes L having different wavelengths, input into the first optical port 1OP, into a first set of two or more separate channels or lanes of light that are output on two or more optical outputs, e.g., two or more optical outputs O5, O6, O7, and O8. A second, different, set of the optical demultiplexers, e.g., 2DM, 3DM, and 4DM, may be operative to separate the same stream of light, including the plurality of optical channels or lanes L having different wavelengths, input into a second optical port 2OP into a second, different, set of two or more separate channels or lanes of light that are output on two or more of the optical outputs.

With reference to Fig. 3 and with continuing reference to Fig. 1, in some non-limiting embodiments or examples, a PIC chip in accordance with the principles of the present disclosure may comprise a transmitter in which the interface port unit IPU includes optical ports 1OP, 2OP, 3OP, 4OP, 5OP, and 6OP. In this example, the photonics circuit unit PCU comprises: an optical multiplexer 1MX including optical inputs I1 and I2 optically coupled to the optical port 1OP and the optical port 2OP and optical outputs O1 and O2; an optical multiplexer 2MX including optical inputs I3 and I4 optically coupled to the optical port 3OP and the optical port 4OP and optical outputs O3 and O4; and modulators M1-M4 coupled between the optical ports 1OP-4OP and the optical inputs I1-I4.

In this example, the photonics circuit 1PC may comprise an optical multiplexer 3MX including optical inputs I5 and I6 optically coupled to optical outputs O1 and O3 and an optical output O5 optically coupled to optical port 5OP. The photonics circuit 2PC may, in this example, comprise an optical multiplexer 4MX including optical inputs I7 and I8 optically coupled to optical outputs O2 and O4 and an optical output O6 optically coupled to optical port 6OP.

In an example, a first set of optical multiplexers comprising, for example, optical multiplexers 1MX, 2MX, and 3MX and a second set of optical multiplexers comprising, for example, optical multiplexers 1MX, 2MX, and 4MX may be operative, one set of optical multiplexers at a time, to combine a plurality of optical channels or lanes (e.g., L0-L3), wherein each optical channel or lane has a unique wavelength of light, input into a like plurality of the optical input ports 1OP - 4OP into a first stream of light output on optical output port 5OP or a second stream of light output on optical output port 6OP, respectively. In an example, each stream of light may include one or more of the optical channels or lanes L0, L1, L2 and L3.

In an example, the plurality of optical channels or lanes may include at least two optical channels or lanes L0-L3 input into at least two of the optical input ports 1OP-4OP. In another example, the plurality of optical channels or lanes may include all of the optical channels or lanes L0-L3 input into respective optical ports 1OP-4OP.

With continuing reference to Figs. 1 and 3, as can be seen, the PIC chip in accordance with the principles of the present disclosure comprising a transmitter may include the combination of the photonics circuit 1PC in the nature of an optical multiplexer 3MX, the photonics circuit 2PC in the nature of an optical multiplexer 4MX, and the photonics circuit unit PCU may comprise optical multiplexers 1MX and 2 MX and modulators M1-M4 between the optical multiplexers 1MX and 2MX and optical ports 1OP-4OP of the PIC chip. The operation of the modulators M1-M4 may be controlled by electrical signals provided to control inputs C1-C4 of the modulators M1-M4 from the external circuitry, e.g., electrical drivers (not shown) of the external circuitry.

In an example of the operation of the PIC of Fig. 3, a first set of the optical multiplexers, e.g., 1MX, 2MX and 3MX, may be operative to combine streams of light, including optical channels or lanes having different wavelengths, input into two or more of the optical input ports 1OP-4OP of the PIC chip, into a first stream of light of the channels or lanes, having the different wavelengths, that is output to the optical output port 5OP of the PIC chip and to the external optical fiber (shown in dashed line) when connected to the optical output port 5OP. In another example, a second, different, set of the optical multiplexers 1MX, 2MX and 4MX may be operative to combine the same streams of light input into two or more of the optical ports 1OP-4OP of the PIC chip, into a second stream of light of the channels or lanes having the different wavelengths, that is output to the optical output port 6OP of the PIC chip and to the external optical fiber (shown in solid line) when connected to the optical output port 6OP.

With reference to Fig. 4 and with continuing reference to Fig. 1, in some non-limiting embodiments or examples, a PIC chip, in the nature of a receiver PIC chip, in accordance with the principles of the present disclosure may comprise the photonics circuit unit PCU comprising a plurality of optical-electrical converters or photodiodes PD optically coupled between the photonics circuit 1PC and the photonics circuit 2PC. In this example, each optical-electrical converter or photodiode PD is disposed whereupon light output by an optical circuit element of the photonics circuit 1PC or light output by an optical circuit element of the photonics circuit 2PC is received by the optical-electrical converter or photodiode PD and converted by the optical-electrical converter or photodiode PD into a corresponding electrical signal. In this example, each optical circuit element may comprise a micro ring.

More specifically, the photonics circuit 1PC may include micro rings 1MR1-1MR4 and the photonics circuit 2PC may include micro rings 2MR1-2MR4. The plurality of optical-electrical converters or photodiodes PD may include optical-electrical converters or photodiodes PD1-PD4, wherein optical-electrical converter or photodiode PD1 may be optically coupled to a micro ring pair 1MR1 and 2MR1, optical-electrical converter or photodiode PD2 may be optically coupled to a micro ring pair 1MR2 and 2MR2, optical-electrical converter or photodiode PD3 may be optically coupled to a micro ring pair 1MR3 and 2MR3, and optical-electrical converter or photodiode PD4 may be optically coupled to a micro ring pair 1MR4 and 2MR4.

In the example shown in Fig. 4, each optical-electrical converter or photodiode PD1 - PD4 converts the optical signals output via one or both of its respective micro ring pair into corresponding electrical (e.g., digital) signals which are output to the external circuitry, may be circuitry now known or hereafter developed capable of processing or handling electrical (e.g., analog or digital) signals such as, for example, a DSP, or a processor, or a CPU, or a microprocessor.

In an example, the micro rings of each micro ring pair may tuned to at least one of the following: to detect a different frequencies of light; to detect a different wavelengths of light; to detect different phases of light; to have different losses at different frequencies; and to attenuate different frequencies.

In an example, to avoid potential operational interference between the photonics circuit 1PC (including micro rings 1MR1-1MR4) and the photonics circuit 2PC (including micro rings 2MR1-2MR4) during use of the PIC chip, only one of the optical port 1OP or optical port 2OP at time may be coupled to an external optical fiber that is not part of the PIC chip.

Although the disclosure has been described in detail for the purpose of illustration based on what is currently considered to be the most practical and preferred embodiments, it is to be understood that such detail is solely for that purpose and that the disclosure is not limited to the disclosed embodiments, but, on the contrary, is intended to cover modifications and equivalent arrangements that are within the spirit and scope of the appended claims. For example, it is to be understood that the present disclosure contemplates that, to the extent possible, one or more features of any embodiment can be combined with one or more features of any other embodiment.

### Representative features

Aspects of the present disclosure are set out below in the following numbered clauses:
1. A photonics integrated circuit (PIC) chip comprising:
   a substrate;
   an interface port unit IPU formed on the substrate;
   a photonics circuit unit PCU formed on the substrate;
   a photonics circuit 1PC formed on the substrate and optically coupled between the interface port unit IPU and the photonics circuit unit PCU; and
   a photonics circuit 2PC formed on the substrate and optically coupled between the interface port unit IPU and the photonics circuit unit PCU in parallel with photonics circuit 1PC;
   wherein the photonics circuit 1PC and the photonics circuit 2PC are at least one of the following:
      functional duplicates of each other with intentionally introduced physical differences in their fabrication layouts;
      differently optically tuned versions of each other; and
      functionally equivalent versions of each other with intentionally introduced differences in their circuit layouts.
2. The PIC chip of clause 1, wherein the interface port unit IPU includes:
   an optical port 1OP; and
   an optical port 2OP.
3. The PIC chip of clause 2, wherein the optical port 1OP and the optical port 2OP are spaced between 1 micrometers and 20 millimeters, inclusive, from each other.
4. The PIC chip of clause 1, wherein the differently optically tuned versions of the photonics circuit 1PC and the photonics circuit 2PC are tuned to at least one of the following:
   to detect different frequencies of light;
   to detect different wavelengths of light;
   to detect different phases of light;
   to have different losses at different frequencies; and
   to attenuate different frequencies.
5. The PIC chip of clause 1, wherein the functionally equivalent versions of the photonics circuit 1PC and the photonics circuit 2PC with intentionally introduced differences in their circuit layouts include at least one of the following:
   one or more optical elements of the photonics circuit 1PC each having a different geometrical size compared to a comparable functionally equivalent element of the photonics circuit 2PC;
   a portion of the photonics circuit 1PC having a different number of optical elements compared to a comparable functionally equivalent portion of the photonics circuit 2PC; and
   a portion of the photonics circuit 1PC having one or more different optical elements compared to a comparable functionally equivalent portion of the photonics circuit 2PC.
6. The PIC chip of clause 1, further including the photonics circuit unit PCU connected to external circuitry that is not part of the PIC chip, wherein:
   (1) when the PIC chip is used as a receiver, the photonics circuit unit PCU outputs to the external circuitry:
      (a) one or more optical signals received by the photonics circuit unit PCU from the photonics circuit 1PC or the photonics circuit 2PC; or
      (b) one or more electrical signals which the photonics circuit unit PCU converts from one or more optical signals received by the photonics circuit unit PCU from the photonics circuit 1PC or the photonics circuit 2PC;
      and
   (2) when the PIC chip is used as a transmitter, the photonics circuit unit PCU receives from the external circuitry:
      (a) one or more optical signals which the photonics circuit unit PCU outputs to the photonics circuit 1PC, the photonics circuit 2PC, or both; or
      (b) one or more electrical signals which the photonics circuit unit PCU converts to one or more optical signals which the photonics circuit unit PCU outputs to the photonics circuit 1PC, the photonics circuit 2PC, or both.
7. The PIC chip of clause 1, further including an optical switch operative for coupling the photonics circuit unit PCU to either the photonics circuit 1PC or the photonics circuit 2PC.
8. The PIC chip of clause 2, wherein:
   the photonics circuit 1PC comprises an optical demultiplexer 1DM including an optical input I1 optically coupled to the optical port 1OP and optical outputs O1 and O2;
   the photonics circuit 2PC comprises an optical demultiplexer 2DM including an optical input I2 optically coupled to the optical port 2OP and optical outputs O3 and O4;
   the photonics circuit unit PCU comprises an optical demultiplexer 3DM, an optical demultiplexer 4DM, and optical-electrical converters or photodiodes PD1-PD4;
   the optical demultiplexer 3DM comprises optical inputs I3 and I4 optically coupled to optical outputs O1 and O3 and optical outputs O5 and O6 optically coupled to the optical-electrical converters or photodiodes PD1 and PD2;
   the optical demultiplexer 4DM comprises optical inputs I5 and I6 optically coupled to optical outputs O2 and O4 and optical outputs O7 and O8 optically coupled to the optical-electrical converters or photodiodes PD3 and PD4; and
   a first set of the optical demultiplexers comprising 1DM, 3DM, and 4DM and a second set of the optical demultiplexers comprising 2DM, 3DM, and 4DM are operative, one set of the optical demultiplexers at a time, whereupon a stream of light including a plurality of optical channels or lanes (L) having different wavelengths of light input into the optical port 1OP or the optical port 2OP, respectively, are separated into individual optical channels or lanes, wherein each said individual optical channel or lane is output on a single one of the optical outputs O5 - O8.
9. The PIC chip of clause 8, wherein an arrangement of the plurality of optical channels or lanes output on a plurality of the optical outputs O5 - O8 is different when the stream of light including the plurality of optical channels or lanes is input into the optical port 1OP or the optical port 2OP.
10. The PIC chip of clause 8, wherein:
   when the stream of light including the plurality of optical channels or lanes, including optical channels or lanes L0-L3, is input into the optical port 1OP, the first set of optical demultiplexers output optical channel or lane L0 on optical output O5, output optical channel or lane L1 on optical output O7, output optical channel or lane L2 on optical output O6, and output optical channel or lane L3 on optical output O8; and
   when the stream of light including the plurality of optical channels or lanes, including optical channels or lanes L0-L3, is input into the optical port 2OP, the second set of optical demultiplexers output optical channel or lane L0 on optical output O6, output optical channel or lane L1 on optical output O8, output optical channel or lane L2 on optical output O5, and output optical channel or lane L3 on optical output O7.
11. The PIC chip of clause 2, wherein:
   the interface port unit IPU includes optical ports 3OP, 4OP, 5OP, and 6OP;
   the photonics circuit unit PCU comprises:
      an optical multiplexer 1MX including optical inputs I1 and I2 optically coupled to the optical port 1OP and the optical port 2OP and optical outputs O1 and O2;
      an optical multiplexer 2MX including optical inputs I3 and I4 optically coupled to the optical port 3OP and the optical port 4OP and optical outputs O3 and O4; and
      modulators M1-M4 coupled between the optical ports 1OP-4OP and the optical inputs I1-I4;
   the photonics circuit 1PC comprises an optical multiplexer 3MX including optical inputs I5 and I6 optically coupled to optical outputs O1 and O3 and an optical output O5 optically coupled to optical port 5OP;
   the photonics circuit 2PC comprises an optical multiplexer 4MX including optical inputs I7 and I8 optically coupled to optical outputs O2 and O4 and an optical output O6 optically coupled to optical port 6OP; and
   a first set of optical multiplexers comprising optical multiplexers 1MX, 2MX, and 3MX and a second set of optical multiplexers comprising optical multiplexers 1MX, 2MX, and 4MX are operative, one set of the optical multiplexers at a time, to combine a plurality of optical channels or lanes (L) input into a like plurality of the optical ports 1OP - 4OP into a first stream of light output on optical port 5OP or a second stream of light output on optical port 6OP, respectively, whereupon each optical channel or lane has a unique wavelength of light.
12. The PIC chip of clause 11, wherein the plurality of optical channels or lanes include at least two optical channels or lanes L1-L4 input into at least two of the optical ports 1OP-4OP.
13. The PIC chip of clause 12, wherein the plurality of optical channels or lanes include optical channels or lanes L1-L4 input into respective optical ports 1OP-4OP.
14. The PIC chip of clause 2, wherein:
   the photonics circuit unit PCU comprises a plurality of optical-electrical converters or photodiodes PD optically coupled between the photonics circuit 1PC and the photonics circuit 2PC; and
   each optical-electrical converter or photodiode PD is disposed whereupon light output by an optical circuit element of the photonics circuit 1PC or an optical circuit element of the photonics circuit 2PC is received by the optical-electrical converter or photodiode PD and converted by the optical-electrical converter or photodiode PD into a corresponding electrical signal.
15. The PIC chip of clause 14, wherein each optical circuit element comprises a micro ring.
16. The PIC chip of clause 15, wherein:
   the photonics circuit 1PC includes micro rings 1MR1-1MR4;
   the photonics circuit 2PC includes micro rings 2MR1-2MR4;
   the plurality of optical-electrical converters or photodiodes PD includes optical-electrical converters or photodiodes PD1-PD4;
   the optical-electrical converter or photodiode PD1 is optically coupled to a micro ring pair 1MR1 and 2MR1;
   the optical-electrical converter or photodiode PD2 is optically coupled to a micro ring pair 1MR2 and 2MR2;
   the optical-electrical converter or photodiode PD3 is optically coupled to a micro ring pair 1MR3 and 2MR3; and
   the optical-electrical converter or photodiode PD4 is optically coupled to a micro ring pair 1MR4 and 2MR4.
17. The PIC chip of clause 16, wherein the micro rings of each micro ring pair are tuned to at least one of the following:
   to detect a different frequencies of light;
   to detect a different wavelengths of light;
   to detect different phases of light;
   to have different losses at different frequencies; and
   to attenuate different frequencies.
18. The PIC chip of clause 2, wherein, to avoid operational interference between the photonics circuit 1PC and the photonics circuit 2PC during use of the PIC chip, only one of the optical port 1OP or optical port 2OP at time is coupleable to an external optical fiber that is not part of the PIC chip.
19. The PIC chip of clause 1, wherein:
   the combination of the photonics circuit 1PC, the photonics circuit 2PC, and the photonics circuit unit PCU comprise optical demultiplexers;
   a first set of the optical demultiplexers is operative to separate a stream of light, including a plurality of optical channels or lanes having different wavelengths, input into a first optical port into a first, parallel set of the optical channels or lanes of light; and
   a second, different, set of the optical demultiplexers is operative to separate the stream of light, including the plurality of optical channels or lanes having different wavelengths, input into a second optical port into a second, different, parallel set of the optical channels or lanes of light.
20. The PIC chip of clause 1, wherein:
   the combination of the photonics circuit 1PC, the photonics circuit 2PC, and the photonics circuit unit PCU comprise optical multiplexers and the photonics circuit unit PCU further comprises modulators between the optical multiplexers and input optical ports of the PIC chip;
   a first set of the optical multiplexers is operative to combine parallel streams of light, including parallel optical channels or lanes having different wavelengths, input into optical input ports of the PIC chip, into a first stream of light of the channels or lanes, having different wavelengths, that is output on a first optical output port of the PIC chip; and
   a second, different, set of the optical multiplexers is operative to combine the parallel streams of light input into the optical input ports of the PIC chip, into a second stream of light of the channels or lanes having different wavelengths, that is output on a second optical output port of the PIC chip.

## Claims

1. A photonics integrated circuit (PIC) chip comprising:
a substrate;
an interface port unit IPU formed on the substrate;
a photonics circuit unit PCU formed on the substrate;
a photonics circuit 1PC formed on the substrate and optically coupled between the interface port unit IPU and the photonics circuit unit PCU; and
a photonics circuit 2PC formed on the substrate and optically coupled between the interface port unit IPU and the photonics circuit unit PCU in parallel with photonics circuit 1PC;
wherein the photonics circuit 1PC and the photonics circuit 2PC are at least one of the following:
functional duplicates of each other with intentionally introduced physical differences in their fabrication layouts;
differently optically tuned versions of each other; and
functionally equivalent versions of each other with intentionally introduced differences in their circuit layouts.

2. The PIC chip of claim 1, wherein the interface port unit IPU includes:
an optical port 1OP; and
an optical port 2OP;
and optionally wherein the optical port 1OP and the optical port 2OP are spaced between 1 micrometers and 20 millimeters, inclusive, from each other.

3. The PIC chip of any preceding claim, wherein the differently optically tuned versions of the photonics circuit 1PC and the photonics circuit 2PC are tuned to at least one of the following:
to detect different frequencies of light;
to detect different wavelengths of light;
to detect different phases of light;
to have different losses at different frequencies; and
to attenuate different frequencies.

4. The PIC chip of any preceding claim, wherein the functionally equivalent versions of the photonics circuit 1PC and the photonics circuit 2PC with intentionally introduced differences in their circuit layouts include at least one of the following:
one or more optical elements of the photonics circuit 1PC each having a different geometrical size compared to a comparable functionally equivalent element of the photonics circuit 2PC;
a portion of the photonics circuit 1PC having a different number of optical elements compared to a comparable functionally equivalent portion of the photonics circuit 2PC; and
a portion of the photonics circuit 1PC having one or more different optical elements compared to a comparable functionally equivalent portion of the photonics circuit 2PC.

5. The PIC chip of any preceding claim, further including the photonics circuit unit PCU connected to external circuitry that is not part of the PIC chip, wherein:
(1) when the PIC chip is used as a receiver, the photonics circuit unit PCU outputs to the external circuitry:
(a) one or more optical signals received by the photonics circuit unit PCU from the photonics circuit 1PC or the photonics circuit 2PC; or
(b) one or more electrical signals which the photonics circuit unit PCU converts from one or more optical signals received by the photonics circuit unit PCU from the photonics circuit 1PC or the photonics circuit 2PC;
and
(2) when the PIC chip is used as a transmitter, the photonics circuit unit PCU receives from the external circuitry:
(a) one or more optical signals which the photonics circuit unit PCU outputs to the photonics circuit 1PC, the photonics circuit 2PC, or both; or
(b) one or more electrical signals which the photonics circuit unit PCU converts to one or more optical signals which the photonics circuit unit PCU outputs to the photonics circuit 1PC, the photonics circuit 2PC, or both.

6. The PIC chip of any preceding claim, further including an optical switch operative for coupling the photonics circuit unit PCU to either the photonics circuit 1PC or the photonics circuit 2PC.

7. The PIC chip of claim 2, wherein:
the photonics circuit 1PC comprises an optical demultiplexer 1DM including an optical input I1 optically coupled to the optical port 1OP and optical outputs O1 and O2;
the photonics circuit 2PC comprises an optical demultiplexer 2DM including an optical input I2 optically coupled to the optical port 2OP and optical outputs O3 and O4;
the photonics circuit unit PCU comprises an optical demultiplexer 3DM, an optical demultiplexer 4DM, and optical-electrical converters or photodiodes PD1-PD4;
the optical demultiplexer 3DM comprises optical inputs I3 and I4 optically coupled to optical outputs O1 and O3 and optical outputs O5 and O6 optically coupled to the optical-electrical converters or photodiodes PD1 and PD2;
the optical demultiplexer 4DM comprises optical inputs I5 and I6 optically coupled to optical outputs O2 and O4 and optical outputs O7 and O8 optically coupled to the optical-electrical converters or photodiodes PD3 and PD4; and
a first set of the optical demultiplexers comprising 1DM, 3DM, and 4DM and a second set of the optical demultiplexers comprising 2DM, 3DM, and 4DM are operative, one set of the optical demultiplexers at a time, whereupon a stream of light including a plurality of optical channels or lanes (L) having different wavelengths of light input into the optical port 1OP or the optical port 2OP, respectively, are separated into individual optical channels or lanes, wherein each said individual optical channel or lane is output on a single one of the optical outputs O5 - O8.

8. The PIC chip of claim 7, wherein an arrangement of the plurality of optical channels or lanes output on a plurality of the optical outputs O5 - O8 is different when the stream of light including the plurality of optical channels or lanes is input into the optical port 1OP or the optical port 2OP;
or wherein:
when the stream of light including the plurality of optical channels or lanes, including optical channels or lanes L0-L3, is input into the optical port 1OP, the first set of optical demultiplexers output optical channel or lane L0 on optical output O5, output optical channel or lane L1 on optical output O7, output optical channel or lane L2 on optical output O6, and output optical channel or lane L3 on optical output O8; and
when the stream of light including the plurality of optical channels or lanes, including optical channels or lanes L0-L3, is input into the optical port 2OP, the second set of optical demultiplexers output optical channel or lane L0 on optical output O6, output optical channel or lane L1 on optical output O8, output optical channel or lane L2 on optical output O5, and output optical channel or lane L3 on optical output O7.

9. The PIC chip of claim 2, wherein:
the interface port unit IPU includes optical ports 3OP, 4OP, 5OP, and 6OP;
the photonics circuit unit PCU comprises:
an optical multiplexer 1MX including optical inputs I1 and I2 optically coupled to the optical port 1OP and the optical port 2OP and optical outputs O1 and O2;
an optical multiplexer 2MX including optical inputs I3 and I4 optically coupled to the optical port 30P and the optical port 4OP and optical outputs O3 and O4; and
modulators M1-M4 coupled between the optical ports 1OP-4OP and the optical inputs I1-I4;
the photonics circuit 1PC comprises an optical multiplexer 3MX including optical inputs I5 and I6 optically coupled to optical outputs O1 and O3 and an optical output O5 optically coupled to optical port 5OP;
the photonics circuit 2PC comprises an optical multiplexer 4MX including optical inputs I7 and I8 optically coupled to optical outputs O2 and O4 and an optical output O6 optically coupled to optical port 6OP; and
a first set of optical multiplexers comprising optical multiplexers 1MX, 2MX, and 3MX and a second set of optical multiplexers comprising optical multiplexers 1MX, 2MX, and 4MX are operative, one set of the optical multiplexers at a time, to combine a plurality of optical channels or lanes (L) input into a like plurality of the optical ports 1OP - 4OP into a first stream of light output on optical port 5OP or a second stream of light output on optical port 6OP, respectively, whereupon each optical channel or lane has a unique wavelength of light;
optionally, wherein the plurality of optical channels or lanes include at least two optical channels or lanes L1-L4 input into at least two of the optical ports 1OP-4OP;
and further optionally, wherein the plurality of optical channels or lanes include optical channels or lanes L1-L4 input into respective optical ports 1OP-4OP.

10. The PIC chip of claim 2, wherein:
the photonics circuit unit PCU comprises a plurality of optical-electrical converters or photodiodes PD optically coupled between the photonics circuit 1PC and the photonics circuit 2PC; and
each optical-electrical converter or photodiode PD is disposed whereupon light output by an optical circuit element of the photonics circuit 1PC or an optical circuit element of the photonics circuit 2PC is received by the optical-electrical converter or photodiode PD and converted by the optical-electrical converter or photodiode PD into a corresponding electrical signal;
optionally, wherein each optical circuit element comprises a micro ring; and
further optionally, wherein:
the photonics circuit 1PC includes micro rings 1MR1-1MR4;
the photonics circuit 2PC includes micro rings 2MR1-2MR4;
the plurality of optical-electrical converters or photodiodes PD includes optical-electrical converters or photodiodes PD1-PD4;
the optical-electrical converter or photodiode PD1 is optically coupled to a micro ring pair 1MR1 and 2MR1;
the optical-electrical converter or photodiode PD2 is optically coupled to a micro ring pair 1MR2 and 2MR2;
the optical-electrical converter or photodiode PD3 is optically coupled to a micro ring pair 1MR3 and 2MR3; and
the optical-electrical converter or photodiode PD4 is optically coupled to a micro ring pair 1MR4 and 2MR4;
preferably, wherein the micro rings of each micro ring pair are tuned to at least one of the following:
to detect a different frequencies of light;
to detect a different wavelengths of light;
to detect different phases of light;
to have different losses at different frequencies; and
to attenuate different frequencies.

11. The PIC chip of claim 2, wherein, to avoid operational interference between the photonics circuit 1PC and the photonics circuit 2PC during use of the PIC chip, only one of the optical port 1OP or optical port 2OP at time is coupleable to an external optical fiber that is not part of the PIC chip.

12. The PIC chip of any preceding claim, wherein:
the combination of the photonics circuit 1PC, the photonics circuit 2PC, and the photonics circuit unit PCU comprise optical demultiplexers;
a first set of the optical demultiplexers is operative to separate a stream of light, including a plurality of optical channels or lanes having different wavelengths, input into a first optical port into a first, parallel set of the optical channels or lanes of light; and
a second, different, set of the optical demultiplexers is operative to separate the stream of light, including the plurality of optical channels or lanes having different wavelengths, input into a second optical port into a second, different, parallel set of the optical channels or lanes of light.

13. The PIC chip of any preceding claim, wherein:
the combination of the photonics circuit 1PC, the photonics circuit 2PC, and the photonics circuit unit PCU comprise optical multiplexers and the photonics circuit unit PCU further comprises modulators between the optical multiplexers and input optical ports of the PIC chip;
a first set of the optical multiplexers is operative to combine parallel streams of light, including parallel optical channels or lanes having different wavelengths, input into optical input ports of the PIC chip, into a first stream of light of the channels or lanes, having different wavelengths, that is output on a first optical output port of the PIC chip; and
a second, different, set of the optical multiplexers is operative to combine the parallel streams of light input into the optical input ports of the PIC chip, into a second stream of light of the channels or lanes having different wavelengths, that is output on a second optical output port of the PIC chip.
